# EUROPEAN PATENT SPECIFICATION

(11) **EP 1 557 911 B1**
(45) Date of publication and mention of the grant of the patent: **13.06.2007**
(21) Application number: 05009382.2
(22) Date of filing: 24.09.2003
(51) Int. Cl.: H01R 13/631, B60R 16/02

(54) **A connector assembling construction and assembling method**
Ein Steckverbinder Zusammenbau und ein Zusammenbauverfahren
Construction d'assemblage d'un connecteur et méthode d'assemblage

(30) Priority: 24.09.2002 JP 2002277510
(43) Date of publication of application: 27.07.2005
(62) Divisional of application: 03021185.8
(73) Proprietor: Sumitomo Wiring Systems, Ltd., Yokkaichi-City, Mie, 510-8503 (JP)
(72) Inventor: Nishide, Satoru Sumitomo Wiring Systems, Ltd., Yokkaichi-city Mie 510-8503 (JP)
(74) Representative: Müller-Boré & Partner Patentanwälte

(56) References cited:
- EP-A- 1 024 560
- EP-A- 1 191 641

## Description

The present invention relates to a connector mounting construction and to an assembling method for enabling the connection of a module-side connector and a body-side connector as a module such as an instrument panel is mounted on a body in an automotive vehicle.

In the case of assembling a module such as an instrument panel with a body in an automotive vehicle, a construction for connecting a moving-side connector provided on the module and a waiting-side connector provided on the body as the module is assembled is adopted to reduce the number of operation steps (for example, see Japanese Unexamined Patent Publication No. 2001-150979).

In this case, the module is so guided as to be substantially horizontally movable toward the body. Upon moving the module, an operator pushes it. The moving-side connector of the module is connected in substantially horizontal direction with the waiting-side connector of the body.

Generally, a connection resistance resulting from a friction acting between terminal fittings mounted in both connectors when the connectors are connected is unavoidably created. The above connector of the module is no exception. A connection resistance created between the two connectors acts as a reaction force against the horizontal movement of the module.

Therefore, it has been conventionally difficult to manually push the module and an improvement has been hoped for.

EP 1,024,560 A2 discloses a connector having a connector housing for at least partly accommodating one or more terminal fittings which can be brought into contact with one or more mating terminal fittings, the connector housing being connectable with a mating connector housing. Furthermore, a plate member is provided formed with one or more positioning holes for positioning the terminal fittings by permitting them to be at least partly introduced therethrough and which is so at least partly mounted into or onto the connector housing as to be movable forward and backward substantially along a connecting direction. A lever is provided to lock the connector in a mating condition.

The present invention was developed in view of the above problem and an object thereof is to improve operability in connecting connectors as a module is assembled with a body while being manually moved in horizontal direction.

This object is solved according to the invention by a connector assembling construction according to claim 1. Preferred embodiments of the invention are subject of the dependent claims.

According to the invention, there is provided a lever-type connector having a connector housing for at least partly accommodating one or more terminal fittings which can be brought into contact with one or more mating terminal fittings, the connector housing being connectable with a mating connector housing, and at least one lever rotatably supported thereon, wherein the lever comprises at least one cam means engageable with at least one mating cam means provided on the mating connector housing and a supportable portion slidably supported on a supporting portion provided on a supporting member to permit the rotation of the lever as the two connector housings are connected, the connector housing is so displaced as to approach the supporting member and the supportable portion is relatively moved with respect to the supporting portion to rotate the lever, thereby engaging the cam means with the mating cam means to exhibit a- cam action, a moving plate formed with one or more positioning holes for positioning the terminal fittings by permitting them to be at least partly introduced therethrough is so at least partly mounted into or onto the connector housing as to be movable forward and backward substantially along a connecting direction.According to an embodiment of the invention, the moving plate is provided with at least one moving plate cam means for moving the moving plate forward and backward in or on the connector housing by being engaged with the cam means as the lever is rotated.

Preferably, the connector housing being provided with a receptacle which substantially surrounds the terminal fittings and into which a mating connector housing is at least partly fittable.

Moreover, the moving plate is so at least partly mounted into the receptacle as to be movable forward and backward substantially along a connecting direction.

Furthermore, the at least one cam means engageable with the at least one mating cam means provided on the mating connector housing may be provided at one end of the lever, whereas the supportable portion slidably supported on the supporting portion is provided at the other end of the lever.

Preferably, as the two connector housings are connected, the connector housing may be so displaced as to approach the supporting member and the supportable portion is slid on the supporting portion to rotate the lever.

Preferebly, a rotary shaft of the lever is located at a position of a lever-mounting surface of the connector housing displaced from the middle along a direction at an angle different from 0° or 180°, preferably substantially normal to the connecting direction.

Preferably, a distance from the rotary shaft to the supportable portion is set longer than a maximum distance from the rotary shaft to the cam means.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view showing a state before two connectors are connected in one embodiment of the invention,
FIG. 2 is a section showing a state where a module and a moving-side connector are located at a position behind a waiting-side connector and shown in FIG. 7(a),
FIG. 3 is a section showing a state where the module and the moving-side connector are moved obliquely upward to the front from the position behind the waiting-side connector and shown in FIG. 7(a) to a position shown in FIG. 7(b),
FIG. 4 is a section showing a state where the moving-side connector is located at a position right above the waiting-side connector and shown in FIG. 7(b),
FIG. 5 is a section showing a state where the moving-side connector is connected with the waiting-side connector and located at a position shown in FIG. 7(c),
FIG. 6 is a section showing a state where the moving-side connector and the waiting-side connector are slid forward while being kept connected from the state shown in FIG. 5,
FIG. 7(a) is a schematic side view showing a state where the module and the moving-side connector are located behind the waiting-side connector, FIG. 7(b) is a schematic side view showing a state where the moving-side connector is located at the position right above the waiting-side connector, and FIG. 7(c) is a schematic side view showing a state where the moving-side connector is connected with the waiting-side connector as the module is moved downward,
FIG. 8 is a front view partly in section showing a state where the connection of the moving-side connector with the waiting-side connector is started,
FIG. 9 is a front view partly in section showing an intermediate stage of connection of the moving-side connector and the waiting-side connector, and
FIG. 10 is a front view partly in section showing a state where the connection of the moving-side connector and the waiting-side connector is completed and the module is relatively displaced leftward from the position shown in FIG. 9.

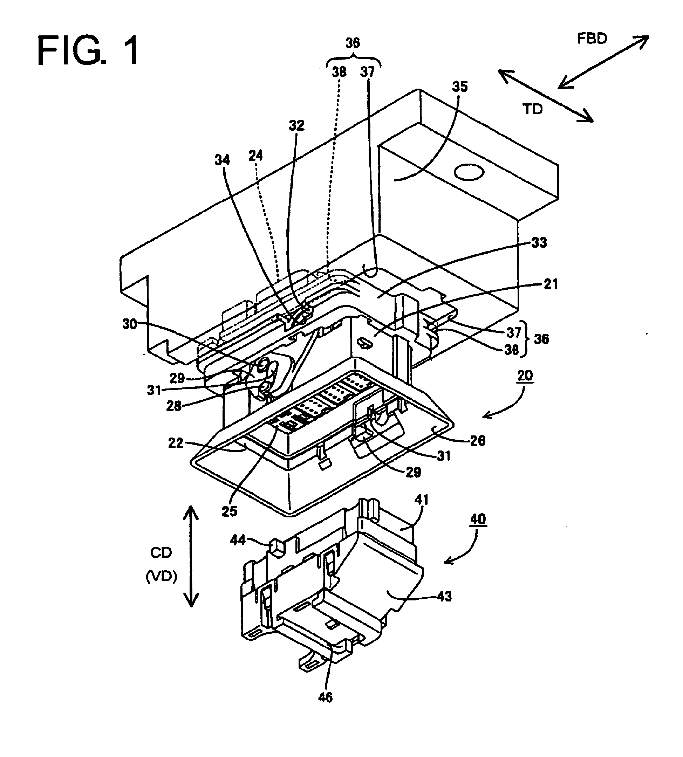

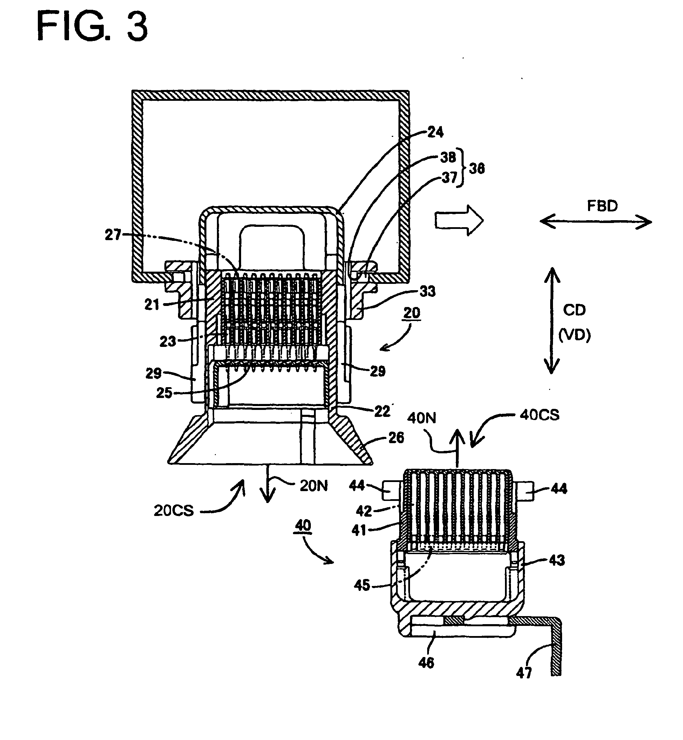

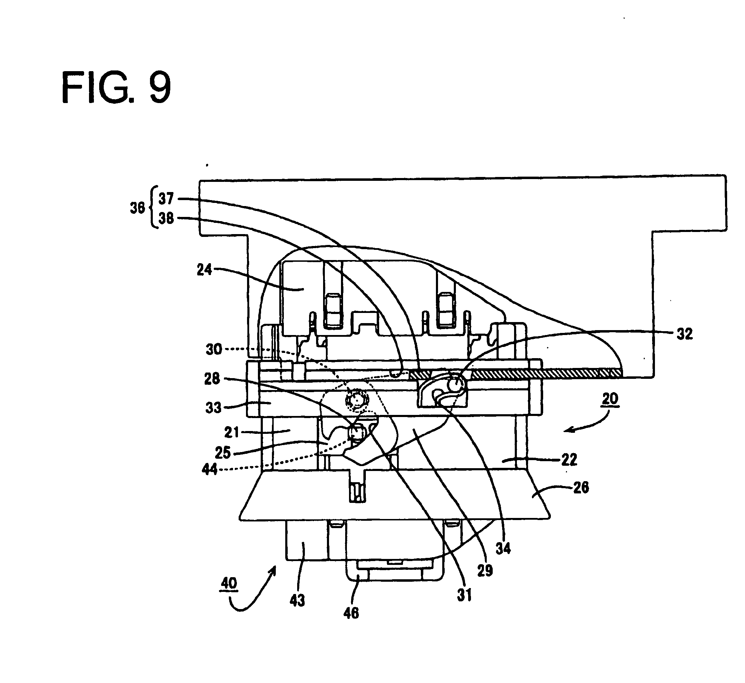

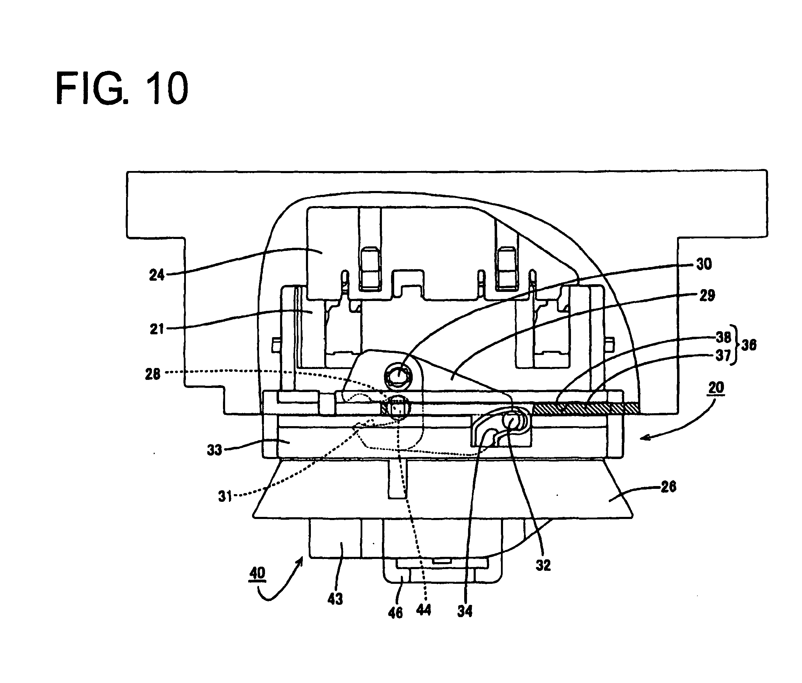

Hereinafter, one preferred embodiment of the present invention is described with reference to FIGS. 1 to 10.

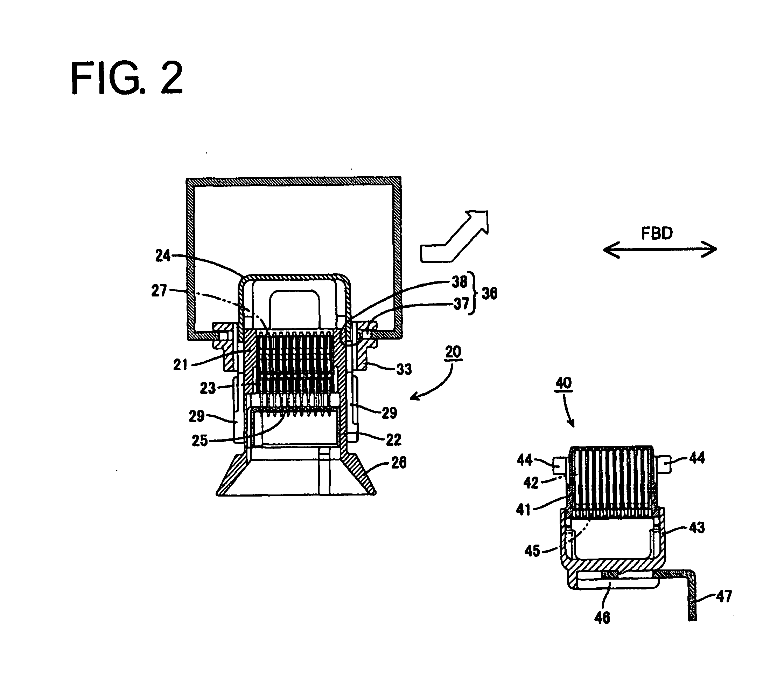

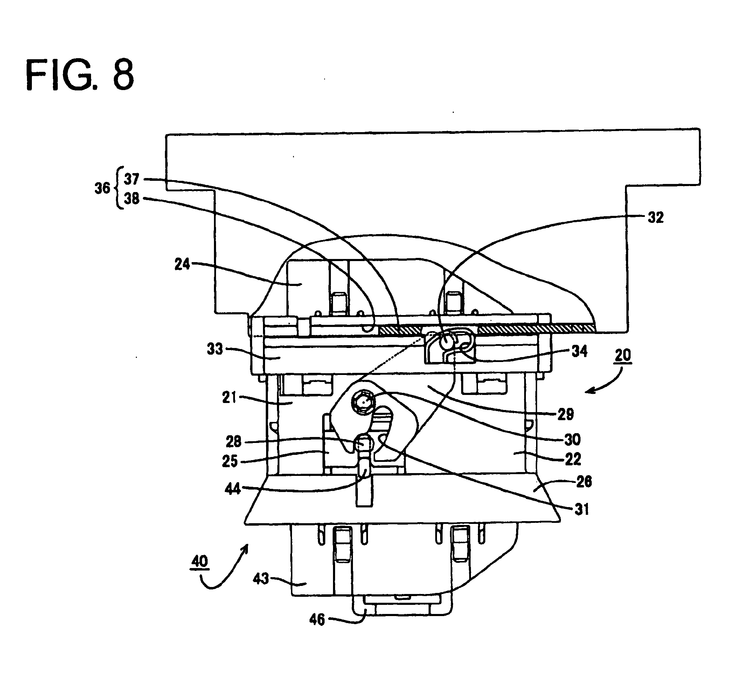

In this embodiment, a moving-side connector 20 to be provided on a module M is connected or connectable with a waiting-side connector 40 ro be provided on a body B as the module M such as an instrument is assembled with the body B in an automotive vehicle. In the following description, right side in FIGS. 2 to 7 is referred to as front side concerning forward and backward or longitudinal directions FBD. It should be noted that FIGS. 8 to 10 are diagrams when viewed from front.

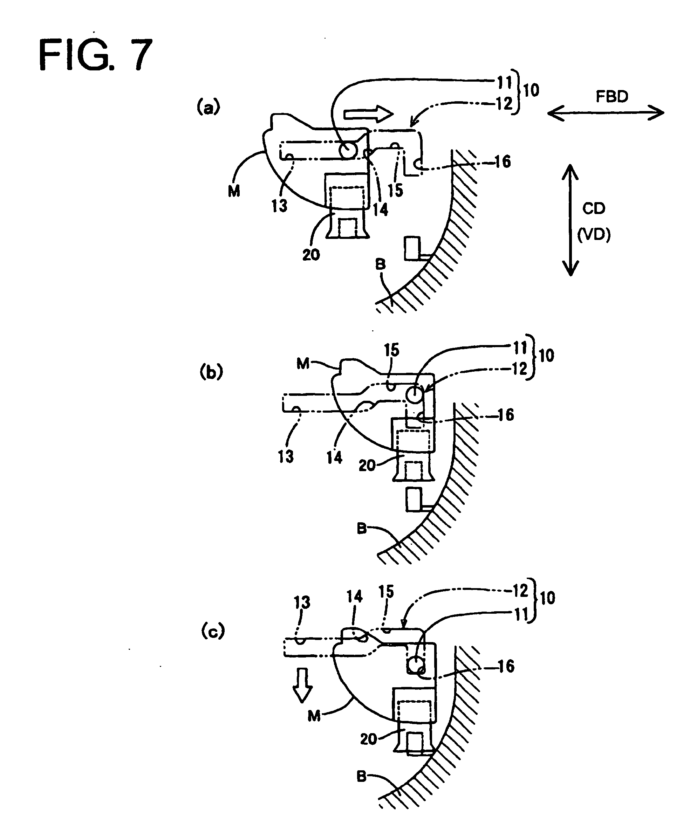

The module M is assembled with the body B while being guided and moved forward in substantially horizontal direction by a guiding means 10. The guiding means 10 is provided with one or more guidable portions 11 provided on the lateral (left and right) surface(s) of the module M and one or more guide rails 12 to be provided on an unillustrated assembly line for the module M. As shown in FIG. 7, each guide rail 12 includes a rear horizontal guiding portion 13 extending substantially straight substantially in horizontal direction (substantially in forward and backward directions FBD), an upward-sloped slanted guiding portion 14 extending obliquely upward or away from the waiting-side connector 40 to the front (or along a direction intersecting the forward and backward directions FBD) from the front end of the rear horizontal guiding portion 13, a front horizontal guiding portion 15 extending substantially straight substantially in horizontal direction (substantially in forward and backward directions FBD) from the front end of the slanted guiding portion 14, and a downward guiding portion 16 extending downward or toward the waiting-side connector 40 from the front end of the front horizontal guiding portion 15. By at least partly fitting the guidable portions 11 into the corresponding guide rails 12, the module M and the moving-side connector 20 are movable substantially forward (substantially along forward and backward directions FBD) along the guide rails 12. Upon moving the module M, an operator e.g. manually pushes the module M. It should be noted that the module M is suspended by an unillustrated crane or suspension means and is detached from the crane after the module M is assembled with the body B and the moving-side connector 20 is connected with the waiting-side connector 40.

Next, the moving-side connector 20 is described. The moving-side connector is the one generally called a male connector and includes a connector housing 21 having a (preferably substantially rectangular) receptacle 22 which is open forward or toward the moving-side connector 20, one or more male terminal fittings 23 at least partly insertable into the connector housing 21 from an insertion direction, preferably from behind, a wire cover 24 mounted or mountable on the rear surface of the connector housing 21, and preferably a moving plate 25 which is so provided in the receptacle 22 as to be movable forward and backward or along a connection direction CD with the waiting side connector 40 (the connection direction CD being preferably arranged at an angle different from 0° or 180°, preferably substantially normal to the forward and backward direction FBD and/or substantially parallel to a vertical direction VD).

A guiding portion 26 slanted (or inclined with respect to the connecting direction CD) to be widened toward the front or distal end is formed at the front opening edge of the receptacle 22. If there is a relative displacement between the waiting-side connector 40 to be described later and the moving-side connector 20 along forward and backward directions FBD and/or transverse direction TD when the waiting-side connector 40 is at least partly fitted into the receptacle 22, the peripheral edge of the upper surface of the waiting-side connector 40 comes substantially into contact with the slanted inner surface of the guiding portion 26, whereby the displacement is corrected by the inclination of the guiding portion 26. The transverse direction TD is arranged at an angle different from 0° or 180°, preferably substantially normal to the forward and backward direction FBD and/or the connecting direction CD.

One or more wires 27 are connected or connectable with the corresponding male terminal fittings 23 at least partly inserted into the connector housing 21, preferably drawn out upward through the rear surface (upper surface) of the connector housing 21, bent preferably substantially to horizontally extend at least partly in the wire cover 24 and drawn out of the wire cover 24.

The moving plate 25 has a known construction formed with positioning holes for positioning tabs at the front ends of the male terminal fittings 23, and one or more cam followers 28 are so formed at the lateral (left and right) edge(s) of the moving plate 25 as to be exposed at the outer surface of the receptacle 22.

Such a moving-side connector 20 is mounted in a frame 33 via one or more, preferably a pair of front and rear levers 29. The levers 29 are substantially flat and rotatably or pivotable supported on supporting shafts 30 on the front and rear surfaces of the connector housing 21. Each lever 29 is formed with at least one cam groove 31 and at least one cam follower 32, and the corresponding cam follower 28 of the moving plate 25 is at least partly engaged with this cam groove 31. The frame 33 preferably is substantially in the form of a rectangular frame at least partly surrounding the connector housing 21 preferably at the front, rear, left and right sides. A pair of front and rear arcuate cam grooves 34 are formed in the frame 33. The cam followers 32 of the levers 29 at least partly are engaged or engageable with the cam grooves 34. A distance from a center of rotation (supporting shaft 30) of the lever 29 to the cam follower 32 is set longer than a maximum distance from the center of rotation of the lever 29 to the cam groove 31. Thus, when the connector housing 21 relatively moves with respect to the frame 33 along vertical direction VD or substantially along the connecting direction CD, large moments are created around the centers of rotation of the levers 29 by the engagement of the cam followers 32 of the levers 29 and the cam grooves 34 of the frame 33, and large pushing/pulling forces acting in vertical direction VD or substantially along the connecting direction CD are exerted on the cam followers 28 of the moving plate 25 and one or more cam followers 44 of the waiting-side connector 40 by the moment forces, as will be described hereinafter.

Upon a relative downward movement or substantially along the connecting direction CD of the moving-side connector 20 with respect to the frame 33, the cam followers 32 of the levers 29 are at least partly caught in the cam grooves 34 of the frame 33 when the cam followers 28, 44 of the moving plate 25 and the waiting-side connector 40 come to be located at the entrances of the cam grooves 31 of the levers 29, whereby any further downward movement of the moving-side connector 20 can be prevented.

The frame 33 and the moving-side connector 20 are so mounted in a holder 35 fixed or fixable to the module M as to be relatively movable substantially along transverse direction TD by a floating mechanism 36. The floating mechanism 36 is described here. A substantially rectangular opening is formed in the bottom surface of the holder 35, and the front and rear edge portions of this opening serve as one or more, preferably a pair of guide ribs 37 transversely extending substantially straight. Further, a pair of guide grooves 38 transversely extending straight are formed in the outer front and rear surfaces of the frame 33. The guide grooves 38 and the guide ribs 37 are engaged or engageable so that the frame 33 and the moving-side connector 20 can make relative transverse horizontal movements with respect to the holder 35 and the module M (or movements substantially the forward and backward direction FBD and/or the transverse direction TD). In this way, the moving-side connector 20 is or can be mounted on the module M with the connecting surface 20CS (front surface substantially facing the waiting-side connector 40) thereof faced down.

The waiting-side connector 40 is the one generally called a female connector, and is provided with a (preferably substantially rectangular) connector housing 41 having such a shape so as to be at least partly fittable into the receptacle 22 of the moving-side connector 20 from below or substantially along the connecting direction CD, one or more female terminal fittings 42 at least partly insertable into the connector housing 41 in an inserting direction, preferably from below, and a wire cover 43 mounted on the bottom surface of the connector housing 41.

One or more, preferably a pair of cam followers 44 project outward or laterally from the lateral (left and right) surface(s) of the connector housing 41. The cam followers 44 are at least partly fitted or fittable into recesses of the corresponding cam followers 28 of the moving plate 25, whereby the cam followers 28, 44 are engaged, as integral units, with the cam grooves 31 of the levers 29. With the cam followers 28, 44 engaged, the waiting-side connector 40 and the moving plate 25 are vertically movable together or movable together substantially along the vertical direction VD or the connecting direction CD. One or more wires 45 are connected or connectable with the male terminal fittings 42 at least partly inserted into the connector housing 41, preferably drawn out downward through the bottom surface of the connector housing 41, bent preferably substantially to horizontally extend in the wire cover 43 and drawn out of the wire cover 43.

A mounting portion 46 is formed on the rear surface (bottom surface) of the wire cover 43, and an L-shaped bracket 47 to be fixed to the body B is or can be mounted on this mounting portion 46. The mounting portion 46 is relatively movable substantially in forward and backward directions FBD with respect to the bracket 47. By the mounting portion 46 and the bracket 47, the waiting-side connector 40 is mounted on the body B with a connecting surface 40CS (front surface facing the moving-side connector 20) thereof faced up or toward the corresponding connecting surface 20CS of the moving-side connector 20. In other words, the connecting surface 20CS of the moving-side connector 20 and the connecting surface 40CS of the waiting-side connector 40 are substantially opposed to each other and/or at least partly facing each other substantially along the connecting direction CD.

Next, the functions of this embodiment are described.

Before connecting the two connectors 20, 40, the guidable portions 11 of the module M are engaged with the rear horizontal guiding portions 13 of the guide rails 12. The one or more male terminal fittings 23 and the wire cover 24 are at least partly assembled with the connector housing 21 in the moving-side connector 20, which is then relatively moved downward with respect to the frame 33 to bring the cam followers 28 of the moving plate 25 to the entrances of the cam grooves 31 of the levers 29. On the other hand, in the waiting-side connector 40, the one or more female terminal fittings 42 and the wire cover 43 are at least partly assembled with the connector housing 41 and the mounting portion 46 of the waiting-side connector 40 is partly assembled with the bracket 47 on the body B (see FIGS. 2 to 5). In this state, the waiting-side connector 40 is movable forward (substantially along the forward and backward direction FBD) with respect to the bracket 47.

In this state, the module M is pushed forward (substantially along the forward and backward direction FBD) toward the body B. The module M is horizontally moved forward along the rear horizontal guiding portions 13 from a position behind (or displaced with respect to) the waiting-side connector 40 as shown in FIG. 7(a), obliquely moved upward to the front (radially toward but axially away from the waiting-side connector 40) along the slanted guiding portions 14, and then horizontally moved along the front horizontal guiding portions 15. The moving-side connector 20 reaches a position substantially right above (or substantially aligned along the connecting direction CD) the waiting-side connector 40 when the guidable portions 11 reach the front ends of the front horizontal guiding portions 15 (see FIG. 7(b)), and the module M moves downward (or substantially along the connecting direction CD toward the waiting-side connector 40) along the downward guiding portions 16 preferably by the action of gravity (see FIG. 7(c)). As the module M moves downward, the moving-side connector 20 is at least partly connected with the waiting-side connector 40.

The two connectors 20, 40 are connected as follows. The receptacle 22 is at least partly fitted on the waiting-side connector 40 from above or substantially along the connecting direction CD as the moving-side connector 20 moves preferably downward. At this time, even if the moving-side connector 20 is displaced from the waiting-side connector 40 in a direction (forward, backward, leftward and/or rightward direction) intersecting with the connecting direction CD with the waiting-side connector 40, the slanted inner surface of the guiding portion 26 comes substantially into contact with the outer peripheral edge of the upper end surface of the connector housing 41 of the waiting-side connector 40. As the connection progresses, the moving-side connector 20 and the module M are horizontally displaced (or displaced in a direction intersecting with the connecting direction CD) by the inclination of the guiding portion 26, thereby being corrected to a substantially proper position with respect to the waiting-side connector 40 and the body B.

When the connection of the receptacle 22 with the waiting-side connector 40 is started, the cam followers 28 of the moving plate 25 preferably are substantially united with the cam followers 44 of the waiting-side connector 40. Thereafter, when a connection resistance is created between the two connectors 20, 40 to displace the moving-side connector 20 upward or along the connecting direction CD with respect to the frame 33, the levers 29 are rotated or pivoted by the engagement of the cam grooves 34 of the frame 33 and the cam followers 32 of the levers 29, and the moving-side connector 20 and the frame 33 are pulled down or substantially along the connecting direction CD toward the waiting-side connector 40 by the engagement of the cam grooves 31 and the cam followers 28, 44 and the cam action resulting from the rotation of the levers 29.

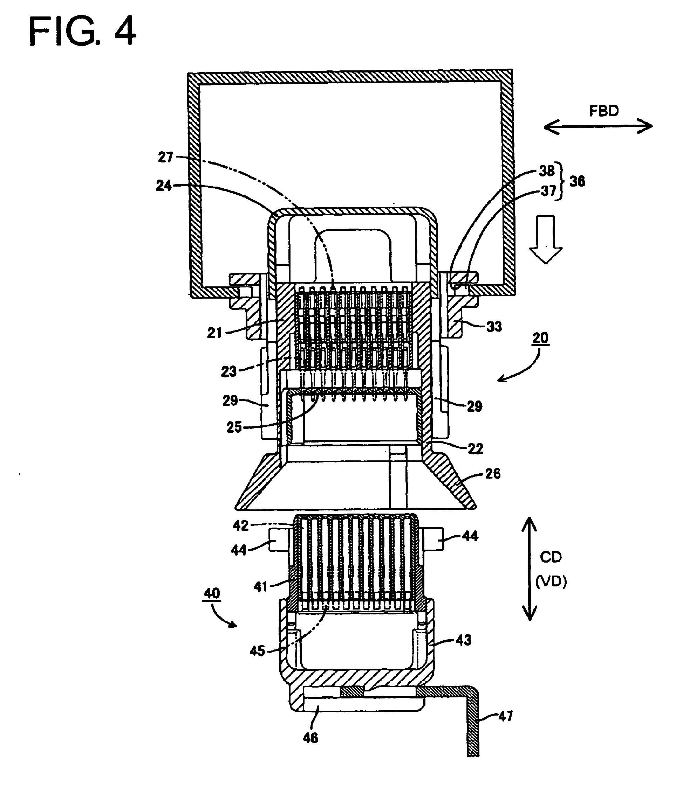

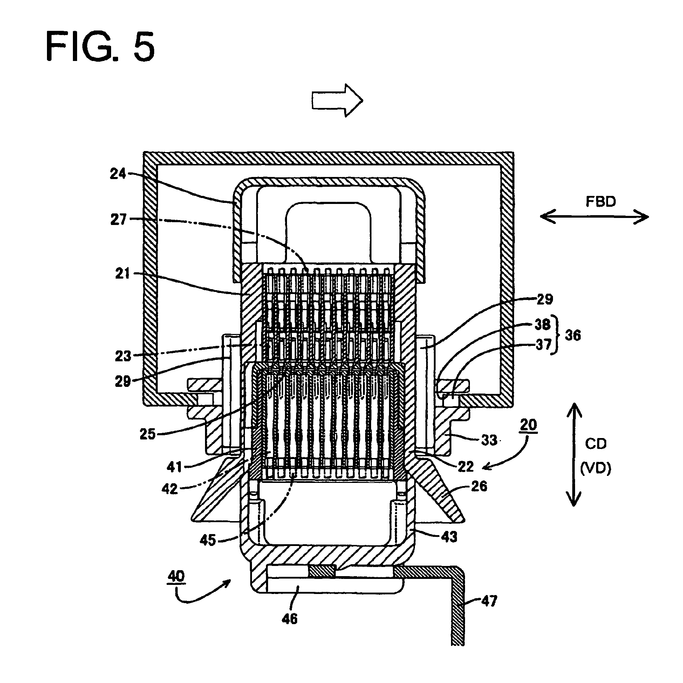

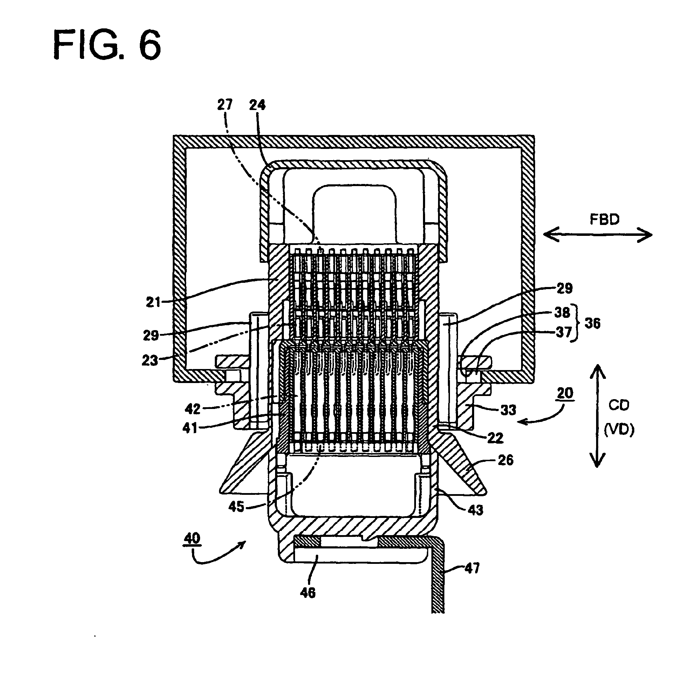

After the two connectors 20, 40 reach their substantially properly connected state (see FIG. 4), the two connectors 20, 40 and the module M are horizontally moved forward or substantially in the direction FBD (leftward in FIGS. 5 and 6) as an integral unit with respect to the body B. This movement brings the module M to a substantially proper assembling position with the body B. Upon moving the two connectors 20, 40 and the module M forward, the mounting portion 46 of the wire cover 43 of the waiting-side connector 40 is slid along the bracket 47.

As described above, in this embodiment, the moving-side connector 20 is connected or connectable with the waiting-side connector 40 as the module M is displaced along the connecting direction CD, preferably substantially downward. Thus, the weight of the module M itself preferably acts as a force for advancing the connecting operation at the time of connecting the two connectors 20, 40. Even if a large connection resistance is created between the connectors 20, 40, it can be easily and securely done to assemble the module M with the body B and to connect the two connectors 20, 40. Therefore, operability is good even if the module M is manually moved.

Further, since the floating mechanism 36 is provided to enable the moving-side connector 20 to be relatively displaced with respect to the module M in horizontal direction intersecting with the connecting direction CD of the two connectors 20, 40, even if the moving-side connector 20 is displaced with respect to the waiting-side connector 40 in horizontal direction intersecting with the connecting direction CD, such a displacement between the connectors 20, 40 can be corrected by the floating mechanism 36. In other words, the connectors 20, 40 can be securely connected.

Further, since the guiding portion 26 slanted to be widened is formed at the opening edge of the receptacle 22 of the moving-side connector 20, if the moving-side connector 20 is horizontally displaced (or displaced in horizontal direction intersecting with the connecting direction CD) with respect to the waiting-side connector 40, such a displacement is automatically corrected by the slanted guiding portion 26 as the connection progresses, whereby the two connectors 20, 40 can be connected without any hindrance. Thus, it is not necessary to manually correct the position of the connector.

Accordingly, to improve operability when two connectors are connected as a module is assembled with a body while being manually moved in horizontal direction, a module M is assembled with a body B by being displaced substantially downward or along a connecting direction CD being arranged at an angle which is inclined by less than about 20° with respect to the vertical direction VD (the connecting direction CD being most preferably substantially parallel to the vertical direction VD) after being substantially horizontally moved by the guidance of a guiding means 10, and the module M is displaced downward to connect the moving-side connector 20 with a waiting-side connector 40. Since the weight of the module M itself at least partly or greatly acts as a connecting force at the time of connecting the two connectors 20, 40, it can be easily and securely done to assemble the module M with the body B and to connect the two connectors 20, 40 even if a large connection resistance is created between the two connectors 20, 40. Accordingly, operability is good even if the module M is manually moved.

### <Other Embodiments>

The present invention is not limited to the above described and illustrated embodiment. For example, the following embodiments are also embraced by the technical scope of the present invention as defined by the claims. Beside the following embodiments, various changes can be made without departing from the scope and spirit of the present invention as defined by the claims.
(1) Although the moving-side connector of the module is a male connector and the waiting-side connector of the body is a female connector in the foregoing embodiment, the module-side connector may be a female connector and the body-side connector may be a male connector according to the present invention.
(2) Although the connectors are connected by using the levers in the foregoing embodiment, the levers may not be used according to the present invention.
(3) Although the moving-side connector is provided with a displacement correcting means comprised of the floating mechanism and the slanted guiding portion in the foregoing embodiment, the displacement correcting means may be provided only in the waiting-side connector or in both the moving-side connector and the waiting-side connector according to the present invention.
(4) Although the floating mechanism and the slanted guiding portion as the displacement correcting means are both provided in the moving-side connector in the foregoing embodiment, either one of the floating mechanism and the guiding portion may be provided in the moving-side connector and the other may be provided in the waiting-side connector according to the present invention.
(5) Although the lever displaying the cam action is described as being pivotable or rotatable, a substantially linearly or otherwise displaceable movable member displaying the cam means can be also used according to the invention.
(6) Although the moving side connector is provided with a movable plate, such movable plate may be omitted according to the present invention.
(7) It is to be understood that the connecting direction CD preferably is substantially vertical so that a force of gravity can act on the moving-side connector 20 so as to more easily connect it on the with the waiting-side connector 40. However, according to the invention the connecting direction may be slightly inclined with respect to the vertical direction (e.g. by an angle of about +/- 20°, more preferably by an angle of about +/- 10°, most preferably by an angle of about +/- 5°) so that a force component of the gravity force along the connecting direction can still substantially assist the connection of the two connectors 20, 40. Accordingly, the connecting surfaces 20CS and 40CS may be correspondingly inclined by a similar or same angle.

Further, the invention relates to a connector assembling construction for connecting a moving-side connector 20 to be provided on a module M and a waiting-side connector 40 to be provided on a body B as the module M such as an instrument panel is assembled with the body B in an automotive vehicle, wherein:
the moving-side connector 20 is mounted on the module M with a connecting surface 20CS thereof having its normal vector 20N inclined by an angle in a range of about -20° to about 20° with respect to a vertical direction VD,
the waiting-side connector 40 is mounted on the body B with a connecting surface 40CS thereof having its normal vector 40N inclined by an angle in a range of about -20° to about 20° with respect to a vertical direction VD, and
the module M is displaced along the connecting direction CD to connect the moving-side connector 20 with the waiting-side connector 40, wherein preferably a guiding means 10 is provided to guide the module M in such a manner as to be assembled with the body B by being displaced downward after being substantially horizontally moved, wherein preferably at least either one of the moving-side connector 20 and the waiting-side connector 40 is provided with a floating mechanism 36 for enabling the respective connector 20; 40 to be relatively displaced with respect to the module M or the body B in a direction intersecting with a connecting direction CD of the two connectors 20, 40, wherein preferably either one 20 of the moving-side connector 20 and the waiting-side connector 40 includes a receptacle 22 into which the other connector 40 is at least partly fittable, and a guiding portion 26 slanted to be widened is formed at or near an opening edge of the receptacle 22, wherein preferably a cam means 28, 44 is provided for assisting the connection of the moving-side connector 20 and the waiting-side connector 40 by displaying a cam action.

Further, the invention relates to a method for connecting a moving-side connector 20 to be provided in a module M and a waiting-side connector 40 to be provided on a body B as the module M such as an instrument panel is assembled with the body B in an automotive vehicle, comprising the following steps:
mounting the moving-side connector 20 on the module M with a connecting surface 20CS thereof having its normal vector 20N inclined by an angle in a range of about -20° to about 20° with respect to a vertical direction VD,
mounting the waiting-side connector 40 on the body B with a connecting surface 40CS thereof having its normal vector 40N inclined by an angle in a range of about -20° to about 20° with respect to a vertical direction VD, and displacing the module M along the connecting direction CD to connect the moving-side connector 20 with the waiting-side connector 40, wherein preferably the method further comprises a step of guiding the module M in such a manner as to be assembled with the body B by being displaced downward after being substantially horizontally moved, wherein preferably the method further comprises a step of allowing at least either one of the moving-side connector 20 and the waiting-side connector 40 to be relatively displaced with respect to the module M or the body B in a direction intersecting with a connecting direction CD of the two connectors 20, 40, wherein preferably either one 20 of the moving-side connector 20 and the waiting-side connector 40 includes a receptacle 22 into which the other connector 40 is at least partly fittable, and a guiding portion 26 slanted to be widened is formed at or near an opening edge of the receptacle 22, wherein preferably the method further comprises a step of assisting the connection of the moving-side connector 20 and the waiting-side connector 40 by displaying a cam action.

### LIST OF REFERENCE NUMERALS

- B: body
- M: module
- 10: guiding means
- 20: moving-side connector
- 22: receptacle
- 26: guiding portion
- 36: floating mechanism
- 40: waiting-side connector

## Claims

1. A lever-type connector (20) having a connector housing (21) for at least partly accommodating one or more terminal fittings (23) which can be brought into contact with one or more mating terminal fittings (42), the connector housing (21) being connectable with a mating connector housing (41), and at least one lever (29) rotatably supported thereon, **characterised in that** :
the lever (29) comprises at least one cam means (31) engageable with at least one mating cam means (44) provided on the mating connector housing (41) and a supportable portion (32) slidably supported on a supporting portion (34) provided on a supporting member (33) to permit the rotation of the lever (29)
as the two connector housings (21, 41) are connected, the connector housing (21) is so displaced as to approach the supporting member (33) and the supportable portion (32) is relatively moved with respect to the supporting portion (34) to rotate the lever (29), thereby engaging the cam means (31) with the mating cam means (44) to exhibit a cam action,
a moving plate (25) formed with one or more positioning holes for positioning the terminal fittings (23) by permitting them to be at least partly introduced therethrough is so at least partly mounted into or onto the connector housing (21) as to be movable forward and backward substantially along a connecting direction (CD).

2. A lever-type connector according to claim 1, wherein the moving plate (25) is provided with at least one moving plate cam means (28) for moving the moving plate (25) forward and backward in or on the connector housing (21) by being engaged with the cam means (31) as the lever (29) is rotated.

3. A lever-type connector according to one or more of the preceding claims, wherein the connector housing (21) being provided with a receptacle (22) which substantially surrounds the terminal fittings (23) and into which a mating connector housing (41) is at least partly fittable.

4. A lever-type connector according to claim 3, wherein the moving plate (25) is so at least partly mounted into the receptacle (22) as to be movable forward and backward substantially along a connecting direction (CD).

5. A lever-type connector according to one or more of the preceding claims, wherein the at least one cam means (31) engageable with the at least one mating cam means (44) provided on the mating connector housing (41) is provided at one end of the lever (29), whereas the supportable portion (32) slidably supported on the supporting portion (34) is provided at the other end of the lever (29).

6. A lever-type connector according to one or more of the preceding claims, wherein as the two connector housings (21, 41) are connected, the connector housing (21) is so displaced as to approach the supporting member (33) and the supportable portion (32) is slid on the supporting portion (34) to rotate the lever (29).

7. A lever-type connector according to one or more of the preceding claims, wherein a rotary shaft (30) of the lever (29) is located at a position of a lever-mounting surface of the connector housing (21) displaced from the middle along a direction at an angle different from 0° or 180°, preferably substantially normal to the connecting direction (CD).

8. A lever-type connector according to claim 7, wherein a distance from the rotary shaft (30) to the supportable portion (32) is set longer than a maximum distance from the rotary shaft (30) to the cam means (31).

## Patentansprüche

1. Hebeltyp-Verbinder (20), welcher ein Verbindergehäuse (21) für ein wenigstens teilweises Aufnehmen von einem oder mehreren Anschlußpaßstück(en) (23), welche(s) in Kontakt mit einem oder mehreren zusammenpassenden Anschlußpaß-stück(en) (42) gebracht werden kann bzw. können, wobei das Verbindergehäuse (21) mit einem zusammenpassenden bzw. abgestimmten Verbindergehäuse (41) verbindbar ist, und wenigstens einen Hebel (29) drehbar daran abgestützt aufweist, **dadurch gekennzeichnet, daß**:
der Hebel (29) wenigstens ein Nockenmittel (31), welches mit wenigstens einem zusammenpassenden Nockenmittel (44) in Eingriff bringbar ist, welches an dem zusammenpassenden Verbindergehäuse (41) zur Verfügung gestellt ist, und einen abstützbaren Abschnitt (32) umfaßt, welcher gleitbar an einem abstützenden bzw. Supportabschnitt (34) abgestützt ist, welcher an einem abstützenden bzw. Supportglied (33) zur Verfügung gestellt ist, um die Rotation des Hebels (29) zu erlauben,
wenn die zwei Verbindergehäuse (21, 41) verbunden sind, das Verbindergehäuse (21) so verschoben ist bzw. wird, um sich dem abstützenden Glied (33) anzunähern, und der abstützbare Abschnitt (32) relativ in bezug auf den abstützenden Abschnitt (34) bewegt ist bzw. wird, um den Hebel (29) zu drehen, wodurch die Nockenmittel (31) mit den zusammenpassenden Nockenmitteln (44) in Eingriff gelangen, um eine Nockenwirkung zu zeigen,
eine sich bewegende Platte (25), welche mit einem oder mehreren positionierenden Loch (Löchern) für ein Positionieren der Anschlußpaßstücke (23) ausgebildet ist, in dem diesen erlaubt ist bzw. wird, wenigstens teilweise **dadurch** eingesetzt zu sein bzw. zu werden, so wenigstens teilweise in oder an dem Verbindergehäuse (21) montiert bzw. angeordnet ist, um vorwärts und rückwärts im wesentlichen entlang einer Verbindungsrichtung (CD) bewegbar zu sein.

2. Hebeltyp-Verbinder nach Anspruch 1, wobei die sich bewegende Platte (25) mit wenigstens einem Bewegungsplatten-Nockenmittel (28) zum Bewegen der sich bewegenden bzw. Bewegungsplatte (25) vorwärts und rückwärts in oder an dem Verbindergehäuse (21) versehen ist, indem es mit den Nockenmitteln (31) in Eingriff gebracht ist bzw. wird, wenn der Hebel (29) rotiert ist bzw. wird.

3. Hebeltyp-Verbinder nach einem oder mehreren der vorangehenden Ansprüche, wobei das Verbindergehäuse (21) mit einer Aufnahme (22) versehen ist, welche im wesentlichen die Anschlußpaßstücke (23) umgibt und in welche ein zusammenpassendes Verbindergehäuse (41) wenigstens teilweise einpaßbar ist.

4. Hebeltyp-Verbinder nach Anspruch 3, wobei die sich bewegende Platte (25) so wenigstens teilweise in die Aufnahme (22) montiert ist, um vorwärts und rückwärts im wesentlichen entlang einer Verbindungsrichtung (CD) bewegbar zu sein.

5. Hebeltyp-Verbinder nach einem oder mehreren der vorangehenden Ansprüche, wobei das wenigstens eine Nockenmittel (31), welches mit dem wenigstens einen zusammenpassenden Nockenmittel (44) in Eingriff bringbar ist, welches an dem zusammenpassenden Verbindergehäuse (41) zur Verfügung gestellt ist, an einem Ende des Hebels (29) vorgesehen bzw. zur Verfügung gestellt ist, während der abstützbare Abschnitt (32), welcher gleitbar an dem abstützenden Abschnitt (34) abgestützt ist, an dem anderen Ende des Hebels (29) zur Verfügung gestellt ist.

6. Hebeltyp-Verbinder nach einem oder mehreren der vorangehenden Ansprüche, wobei, wenn die zwei Verbindergehäuse (21, 41) verbunden sind bzw. werden, das Verbindergehäuse (21) so verlagert ist bzw. wird, um sich dem abstützenden Glied (33) anzunähern, und der abstützbare Abschnitt (32) auf dem abstützenden Abschnitt (34) gleiten gelassen wird, um den Hebel (29) zu drehen.

7. Hebeltyp-Verbinder nach einem oder mehreren der vorangehenden Ansprüche, wobei eine rotierende Welle (30) des Hebels (29) an einer Position einer Hebelmontageoberfläche bzw. - fläche des Verbindergehäuses (21) angeordnet ist, welche von der Mitte entlang einer Richtung unter einem von 0° oder 180° verschiedenen Winkel, vorzugsweise im wesentlichen normal zu der Verbindungsrichtung (CD) verschoben bzw. verlagert ist.

8. Hebeltyp-Verbinder nach Anspruch 7, wobei ein Abstand von der rotierenden Welle (30) zu dem abstützbaren Abschnitt (32) länger als ein maximaler Abstand von der rotierenden Welle (30) zu den Nockenmitteln (31) eingestellt bzw. festgelegt ist.

## Revendications

1. Connecteur de type à levier (20) comprenant un boîtier de connecteur (21) pour recevoir au moins en partie une ou plusieurs armatures de borne (23) qui peuvent être amenées en contact avec une ou plusieurs armatures de borne complémentaires (42), le boîtier de connecteur (21) pouvant s'accoupler avec un boîtier de connecteur complémentaire (41), et au moins un levier (29) supporté de façon tournante sur le boîtier (21),
**caractérisé en ce que**
le levier (29) comprend au moins un moyen de came (31) qui peut venir en prise avec au moins un moyen de came complémentaire (44) prévu sur le boîtier de connecteur complémentaire (41) et une partie supportable (32) supportée de façon coulissante sur une partie de support (34) prévue sur un élément de support (33) pour permettre la rotation du levier (29),
lorsque les deux boîtiers de connecteur (21, 41) sont accouplés, le boîtier de connecteur (21) est déplacé de façon à s'approcher de l'élément de support (33) et la partie supportable (32) est déplacée relativement par rapport à la partie de support (34) de manière à faire tourner le levier (29), amenant ainsi le moyen de came (31) en prise avec le moyen de came complémentaire (44) afin d'effectuer une action de came,
une plaque mobile (25), comportant un ou plusieurs trous de positionnement pour positionner les armatures de borne (23) en leur permettant d'être au moins en partie introduites par les dits trous, est ainsi au moins en partie montée dans ou sur le boîtier de connecteur (21) de façon à être déplaçable vers l'avant et vers l'arrière sensiblement le long d'une direction d'accouplement (CD).

2. Connecteur du type à levier selon la revendication 1, dans lequel la plaque mobile (25) comporte au moins un moyen de came de plaque mobile (28) pour déplacer la plaque mobile (25) vers l'avant et l'arrière dans ou sur le boîtier de connecteur (21) par mise en prise avec le moyen de came (31) lorsqu'on fait pivoter le levier (29).

3. Connecteur du type à levier selon une ou plusieurs des revendications précédentes, dans lequel le boîtier de connecteur (21) comporte un réceptacle (22) qui entoure sensiblement les armatures de borne (23) et dans lequel un boîtier de connecteur complémentaire (41) peut au moins en partie s'ajuster.

4. Connecteur du type à levier selon la revendication 3, dans lequel la plaque mobile (25) est monté au moins en partie dans le réceptacle (22) de manière à être déplaçable vers l'avant et vers l'arrière, sensiblement le long d'une direction d'accouplement (CD).

5. Connecteur du type à levier selon une ou plusieurs des revendications précédentes, dans lequel le dit au moins un moyen de came (31), qui peut venir en prise avec le dit au moins un moyen de came complémentaire (44) prévu sur le boîtier de connecteur complémentaire (41), est prévu à une extrémité du levier (29), tandis que la partie supportable (32) supportée de façon coulissante sur la partie de support (34) est prévue à l'autre extrémité du levier (29).

6. Connecteur du type à levier selon une ou plusieurs des revendications précédentes, dans lequel, lorsque les deux boîtiers de connecteur (21, 41) sont accouplés, le boîtier de connecteur (21) est déplacé de façon à s'approcher de l'élément de support (33) et la partie supportable (32) glisse sur la partie de support (34) pour faire tourner le levier(29).

7. Connecteur du type à levier selon une ou plusieurs des revendications précédentes, dans lequel un arbre rotatif (30) du levier (29) est situé à une position d'une surface de montage de levier du boîtier de connecteur (21) décalée du milieu dans une direction suivant un angle différent de 0 degré ou de 180 degrés et de préférence sensiblement perpendiculaire à la direction d'accouplement (CD).

8. Connecteur du type à levier selon la revendication 7, dans lequel une distance de l'arbre rotatif (30) à la partie supportable (32) est prévue plus longue qu'une distance maximale de l'arbre rotatif (30) au moyen de came (31).
